(19) Europäisches Patentamt / European Patent Office / Office européen des brevets

(11) **EP 3 762 698 B1**

(12) **EUROPÄISCHE PATENTSCHRIFT**

(45) Veröffentlichungstag und Bekanntmachung des Hinweises auf die Patenterteilung:
**10.05.2023  Patentblatt 2023/19**

(21) Anmeldenummer: **19708513.7**

(22) Anmeldetag: **01.03.2019**

(51) Internationale Patentklassifikation (IPC):
*G01L 25/00* (2006.01)   *G01L 3/24* (2006.01)
*G01L 3/26* (2006.01)   *G01L 5/00* (2006.01)
*F03D 17/00* (2016.01)   *F03D 13/30* (2016.01)

(52) Gemeinsame Patentklassifikation (CPC):
**G01L 25/003; G01L 3/242; G01L 3/26; G01L 5/0095; G01L 25/006;** F03D 15/00; F03D 17/00; Y02E 10/72

(86) Internationale Anmeldenummer:
**PCT/EP2019/055130**

(87) Internationale Veröffentlichungsnummer:
**WO 2019/170539 (12.09.2019 Gazette 2019/37)**

(54) **VERFAHREN ZUM ERMITTELN EINER EFFIZIENZ UND/ODER ZUM KALIBRIEREN EINES DREHMOMENTS EINES ANTRIEBSSTRANGS, INSBESONDERE EINER WINDENERGIEANLAGE**

METHOD FOR DETERMINING AN EFFICIENCY AND/OR FOR CALIBRATING A TORQUE OF A DRIVE TRAIN, IN PARTICULAR OF A WIND ENERGY INSTALLATION

PROCÉDÉ DE DÉTERMINATION D'UN RENDEMENT ET/OU D'ÉTALONNAGE D'UN COUPLE D'UNE CHAÎNE CINÉMATIQUE, EN PARTICULIER D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2018  DE 102018203525**

(43) Veröffentlichungstag der Anmeldung:
**13.01.2021  Patentblatt 2021/02**

(73) Patentinhaber: **Fraunhofer-Gesellschaft zur Förderung der angewandten Forschung e.V. 80686 München (DE)**

(72) Erfinder:
• ZHANG, Hongkun
 27572 Bremerhaven (DE)
• EICH, Norbert
 27572 Bremerhaven (DE)

• PILAS, Martin
 27572 Bremerhaven (DE)
• WENSKE, Jan
 27572 Bremerhaven (DE)

(74) Vertreter: **Pfenning, Meinig & Partner mbB Patent- und Rechtsanwälte Joachimsthaler Straße 10-12 10719 Berlin (DE)**

(56) Entgegenhaltungen:
**DE-A1- 19 829 178**

• **MICHAEL PAGITSCH ET AL: "Feasibility of large-scale calorimetric efficiency measurement for wind turbine generator drivetrains",** JOURNAL OF PHYSICS: CONFERENCE SERIES, **Bd. 753, 1. September 2016 (2016-09-01), Seite 072011, XP055581638, GB ISSN: 1742-6588, DOI: 10.1088/1742-6596/753/7/072011**

**Beschreibung**

Die vorliegende Anmeldung betrifft ein Verfahren zum Ermitteln einer Effizienz und/oder zum Kalibrieren eines Drehmoments eines Antriebsstrangs, insbesondere eines Antriebsstrangs einer Windenergieanlage, insbesondere an einem Prüfstand.

Die Effizienz sowie das Drehmoment eines Antriebsstrangs einer Windenergieanlage ist für Hersteller und Betreiber von Windenergieanlagen sowohl eine wichtige Kennziffer bei der Entwicklung als auch ein Indikator für die technische Reife einer Windenergieanlage. Aus diesem Grund gibt es einen Bedarf an einer hinreichend genauen Effizienzmessung bei verschiedenen Lastsituationen und unterschiedlichen Umgebungsbedingungen, insbesondere bei hohen Drehmomenten. Eine möglichst genaue Effizienzbestimmung bei hohen Drehmomenten ermöglicht somit eine bessere Kenntnis der Windenergieanlage. Diese Kenntnis der Effizienzkennlinie ist Grundlage für eine zielgerichtete Weiterentwicklung und einen optimierten Betrieb einer Windenergieanlage.

MICHAEL PAGITSCH ET AL: "Feasibility of large-scale calorimetric efficiency measurement for wind turbine generator drivetrains", JOURNAL OF PHYSICS: CONFERENCE SERIES, Bd. 753, offenbart ein Verfahren zum Ermitteln einer Effizienz eines Antriebsstrangs einer Windenergieanlage.

DE19829178 offenbart ein Verfahren zur Kalibrierung von Drehmomentmessungen eines Antriebsstrangs,

Die Genauigkeit der Effizienzmessung nach dem Stand der Technik ist dabei unter anderem von der Genauigkeit einer Drehmomentmessung am Antriebsstrang der Windenergieanlage abhängig. In modernen Windenergieanlagen beträgt ein Drehmoment der Hauptwelle des Antriebsstrangs mehrere Mega Newton Meter. Kalibriereinrichtungen des Standes der Technik ermöglichen jedoch eine Kalibrierung nur bis zu einem Drehmoment von 1,1 MNm. Da es zur Zeit keine Kalibriermöglichkeit für höhere Drehmomente gibt, ist eine hinreichend genaue Messung des mechanischen Drehmoments an der Hauptwelle einer Windenergieanlage mit den bekannten Verfahren nicht möglich.

Aufgabe der vorliegenden Erfindung ist es somit, ein Verfahren vorzuschlagen, mit dem eine Effizienz einer Windenergieanlage vergleichsweise genau bestimmt werden kann. Des Weiteren kann es eine Aufgabe der Erfindung sein, ein Verfahren zum Kalibrieren eines Hauptwellen-Drehmoments einer Windenergieanlage vorzuschlagen.

Gelöst werden diese Aufgaben durch ein Verfahren gemäß den Merkmalen des Anspruchs 1 bzw. des Anspruchs 2. Vorteilhafte Weiterbildungen ergeben sich mit den Merkmalen der abhängigen Ansprüche und des Ausführungsbeispiels.

Das Verfahren zum Ermitteln einer Effizienz und/oder zur Kalibrierung eines Drehmoments eines Antriebsstrangs, insbesondere eines Antriebsstrangs einer Windenergieanlage, eignet sich insbesondere zur Durchführung an einem Prüfstand und umfasst zwei Versuche. Der Antriebsstrang weist ein motorseitiges Ende an einer mit einem Motor verbindbaren Hauptwelle und ein generatorseitiges Ende auf, zwischen denen ein Generator und gegebenenfalls ein Getriebe angeordnet sind. Der Motor ist vorzugsweise ein Motor des Prüfstands. Die Hauptwelle kann insbesondere eine mit einem Rotor einer Windenergieanlage verbindbare Windenergieanlagenhauptwelle sein.

In einem ersten Versuch wird das motorseitige Ende des Antriebsstrangs angetrieben. Dabei werden eine vom Hauptwellen-Drehmoment abhängige Größe am motorseitigen Ende des Antriebsstrangs und eine elektrische Leistung $P_{elec}$ am generatorseitigen Ende des Antriebsstrangs bestimmt.

In einem zweiten Versuch wird das generatorseitige Ende des Antriebsstrangs angetrieben und ebenfalls die von dem Hauptwellen-Drehmoment abhängige Größe am motorseitigen Ende und die elektrische Leistung $P_{elec}$ am generatorseitigen Ende bestimmt. Aus den im ersten Versuch und im zweiten Versuch bestimmten elektrischen Leistungen und den vom Hauptwellen-Drehmoment abhängigen Größen wird eine Effizienz, insbesondere unter Verwendung zumindest einer Annahme ermittelt, die in vorherigen Experimenten und Analysen vorher festgelegt wird. Eine Annahme ist beispielsweise, dass die Effizienz des ersten Versuchs gleich der Effizienz des zweiten Versuchs ist. Eine andere Annahme kann dahingehend getroffen werden, dass eine Verlustleistung des ersten Versuchs ein Bruchteil der Gesamtverlustleistung ist, z.B. die Hälfte.

Bei dem vorgeschlagenen Verfahren wird im ersten Versuch typischerweise ein erstes Drehmoment und im zweiten Versuch ein zweites Drehmoment aufgebracht. Der Antriebsstrang wird im ersten Versuch durch den Prüfstandmotor angetrieben, während im zweiten Versuch der Antriebstrang mittels des Generators angetrieben wird, indem im zweiten Versuch beispielsweise der Generator als Motor und der Prüfstandmotor als Generator betrieben werden. Elektrische Drehmomente einer elektrischen Maschine weisen das gleiche Vorzeichen, also die gleiche Drehrichtung auf, unabhängig davon, ob sie als Motor oder Generator angetrieben werden. Mechanische Drehmomente auf dem Antriebsstrang haben ebenfalls das gleiche Vorzeichen, also die gleiche Drehrichtung, unabhängig davon, von welcher Seite der Antriebsstrang angetrieben wird. Gegenüber dem elektrischen Drehmoment hat das mechanische Drehmoment jedoch typischerweise ein umgekehrtes Vorzeichen. Da der Antrieb im ersten und zweiten Versuch an verschiedenen Enden des Antriebsstrangs liegt, nämlich im ersten Versuch am motorseitigen Ende, der Antriebsstrang also beispielsweise mittels des Prüfstandmotors angetrieben werden kann, und im zweiten Versuch am generatorseitigen Ende, der Antriebsstrang also mittels des Generators angetrieben werden kann, ist eine Transmissionsrichtung zwischen dem ersten und dem zweiten Versuch umgekehrt. Die rotierende Richtung zwischen dem ersten und dem zweiten Versuch ist also umgekehrt, d.h. die Drehrichtungen im ersten und im zweiten Versuch unterscheiden sich. Dies kann den Vorteil haben, dass in der Effizienzbestimmung eine Messunsicherheit der vom Hauptwellen-Drehmoment abhängigen Größe verringert wird, da sich die Messunsicherheiten des ersten und zweiten Versuchs subtrahieren können.

Wie ausgeführt, wird im ersten Versuch der Antriebsstrang durch einen Motor des Prüfstands angetrieben. Im zweiten Versuch wird der Antriebsstrang durch den Generator des Antriebsstrangs angetrieben, indem dieser mit einem Strom versorgt wird und der Generator als Motor betrieben wird. Der Motor des Prüfstandes kann im zweiten Versuch als Generator betrieben werden.

Zum Ermitteln eines Hauptwellen-Drehmoments kann die vom Hauptwellen-Drehmoment abhängige Größe mittels eines Sensors, vorzugsweise mit einem Dehnungsmessstreifen, gemessen werden. Ferner kann eine Winkelposition der Hauptwelle $\Theta$ und/oder eine Drehgeschwindigkeit, insbesondere mit einem Inkrementalgeber, gemessen werden. So kann auf einfache Art und Weise ein Drehmoment bestimmt werden. Vorzugsweise liegt eine Messstelle zum Messen des Drehmoments, bzw. der Drehmoment-abhängigen Größe, möglichst nah an einer Messstelle zum Messen der Winkelposition bzw. der Drehgeschwindigkeit. Derart kann erreicht werden, dass möglichst wenig Schwingungen zwischen den Messstellen vorkommen, die Messergebnisse verfälschen können.

Die mechanische Leistung berechnet sich aus der Energie zu

$$P_{mech.A} = E_{mech.A}/t_A$$

für den ersten Versuch und zu

$$P_{mech.B} = E_{mech.B}/t_B$$

für den zweiten Versuch, wobei $E_{mech}$ jeweils die mechanische Energie und t die Zeitdauer des jeweiligen Versuchs ist. Dabei kann der erste bzw. der zweite Versuch auch aus einem Hoch- oder Runterfahren der zu prüfenden Anlage bestehen. Zur Vereinfachung können aber möglichst gleichbleibende Leistungsstufen geprüft bzw. angenommen werden.

Die elektrische Leistung berechnet sich aus der Energie zu

$$P_{elec.A} = E_{elec.\,A}/t_A$$

für den ersten Versuch und zu

$$P_{elec.B} = E_{elec.B}/t_B$$

für den zweiten Versuch, wobei $E_{elec}$ jeweils die elektrische Energie und t die Zeitdauer des jeweiligen Versuchs ist.

Unter Verwendung der vom Hauptwellen-Drehmoment abhängigen Größe bzw. des Hauptwellen-Drehmoments kann die mechanische Energie bestimmt werden. Die mechanische Energie kann beispielsweise durch Integrieren des Drehmoments entweder über den Winkel $\Theta$ oder unter Verwendung der Drehgeschwindigkeit $\omega$ über die Zeit ermittelt werden. Die elektrische Leistung kann anhand von Messungen des Stroms und der Spannung ermittelt werden.

Ferner kann aus der vom Hauptwellen-Drehmoment abhängigen Größe und/oder der Winkelposition $\Theta$ bzw. Drehgeschwindigkeit eine mechanische Leistung bestimmt werden. Die mechanische Leistung wird typischerweise über den Zeitraum des ersten bzw. zweiten Versuchs gemittelt. Vorzugsweise wird aus der vom Hauptwellen-Drehmoment abhängigen Größe eine mechanische Leistung für den ersten und für den zweiten Versuch ermittelt. Die für den ersten Versuch ermittelte mechanische Leistung kann somit eine Antriebsleistung sein, während die ermittelte mechanische Leistung für den zweiten Versuch eine Abtriebleistung sein kann.

Zur Bestimmung der elektrischen Leistung kann eine Spannung und ein Strom am generatorseitigen Ende zwischen dem Generator und einem mit diesem verbundenen Umrichter oder an der vom Generator abgewandten Seite des Umrichters gemessen werden. So kann ein Verlust des Umrichters in die Effizienzbestimmung mit einbezogen oder vernachlässigt werden. Im ersten Versuch kann die gemessene elektrische Leistung $P_{elec}$ eine Abtriebleistung und während des zweiten Versuchs eine Antriebleistung sein.

Für den ersten Versuch und für den zweiten Versuch kann jeweils eine Versuchs-Verlustleistung ermittelt werden. Diese beiden ermittelten Versuchs-Verlustleistungen können zu einer Gesamtverlustleistung addiert werden und die Effizienz kann sodann unter Verwendung der Gesamtverlustleistung berechnet werden.

Der erste Versuch wird nachfolgend durch die Indizes *A* und der zweite Versuch wird durch die Indizes *B* gekennzeichnet. Die Versuchs-Verlustleistung für den ersten Versuch kann sich zu

$$P_{Loss.A} = P_{mech.A} - P_{elec.A}$$

ergeben, wobei $P_{mech.A}$ die mechanische Leistung im ersten Versuch und $P_{elec.A}$ die elektrische Leistung im ersten Versuch darstellt.

Die Versuchs-Verlustleistung für den zweiten Versuch kann sich zu

$$P_{Loss.B} = P_{elec.B} - P_{mech.B},$$

ergeben, wobei $P_{mech.B}$ die mechanische Leistung im zweiten Versuch und $P_{elec.B}$ die elektrische Leistung im zweiten Versuch darstellt.

Durch eine Addition der Versuchs-Verlustleistungen $P_{Loss.A}$ und $P_{Loss.B}$ kann eine Gesamtverlustleistung $P_{Loss.total}$ berechnet werden:

$$P_{Loss.total} = P_{Loss.A} + P_{Loss.B} = P_{mech.A} - P_{mech.B} + P_{elec.B} - P_{elec.A}.$$

Insbesondere unter der Annahme, dass die Effizienz des ersten Versuchs und die Effizienz des zweiten Versuchs dieselbe ist ($Effi = Effi_A = Effi_B$),
ergeben sich mit

$$\tilde{P}_{Loss.A} = \tilde{P}_{mech.A}(1 - Effi)$$

$$\tilde{P}_{Loss.B} = \tilde{P}_{elec.B}(1 - Effi)$$

$$\tilde{P}_{Loss.A} = \frac{\tilde{P}_{mech.A}}{\tilde{P}_{elec.B}} \tilde{P}_{Loss.B}$$

die Versuchs-Verlustleistungen in Abhängigkeit der Gesamtverlustleistung zu

$$\tilde{P}_{Loss.A} = \frac{\tilde{P}_{mech.A}}{\tilde{P}_{mech.A} + \tilde{P}_{elec.B}} \tilde{P}_{Loss.total}$$

$$\tilde{P}_{Loss.B} = \frac{\tilde{P}_{elec.B}}{\tilde{P}_{mech.A} + \tilde{P}_{elec.B}} \tilde{P}_{Loss.total}$$

. Die Effizienz $Effi$ kann daraufhin anhand

$$Effi = \frac{\tilde{P}_{elec.A}}{\tilde{P}_{mech.A}} = \frac{\tilde{P}_{elec.A}}{\tilde{P}_{elec.A} + \tilde{P}_{Loss.A}}$$

oder

$$Effi = \frac{\tilde{P}_{mech.B}}{\tilde{P}_{elec.B}} = \frac{\tilde{P}_{elec.B} - \tilde{P}_{Loss.B}}{\tilde{P}_{elec.B}}$$

berechnet werden, wobei die Tilde über den Werten angibt, dass es sich um Mittelwerte handelt.

Es kann auch eine einfachere Annahme gemacht werden, z.B. dass die Verluste der zwei Versuche die gleich sind. Eine allgemeinere Annahme kann dabei sein:

$$P_{Loss.A} = k \cdot P_{Loss.total},$$

wobei k ein Verhältnis aus dem Verlust des ersten Versuchs (Loss.A) gegenüber dem Gesamtverluist (Loss.total) ist. Die Annahme des Werts k kann durch Erfahrung oder durch eine Analyse bestimmt werden, beispielsweise kann k = 0,5 sein.

Die Berechnung der Effizienz in Abhängigkeit der Gesamtverlustleistung $P_{Loss.total}$ hat den Vorteil, dass die Effizienz in Abhängigkeit eines Differenzwerts $\Delta P_{mech} = P_{mech.A} - P_{mech.B}$ bzw. $\Delta P_{elec} = P_{elec.B} - P_{elec.A}$ bestimmt werden kann. Wie oben bereits erwähnt wurde, hat ein derartiger Differenzwert den Vorteil, dass eine Messunsicherheit der Drehmomentmessung bzw. der vom Drehmoment abhängigen Größe bzw. eine Messunsicherheit der elektrischen Leistung durch diese Differenzwerte auf einen kleineren Bereich begrenzt werden kann. Durch eine Überlagerung dieser Versuche können die Messfehler voneinander subtrahiert werden und fallen bei einer Bestimmung der Effizienz weniger ins Gewicht. So kann die Effizienz genauer bestimmt werden, ohne dass eine exakte Drehmomentmessung durchgeführt werden muss.

Zur Bestimmung der vom Hauptwellen-Drehmoment abhängigen Größe kann das Messsignal eines Sensors ausgewertet werden, der an einer Ausgangswelle des Prüfstandmotors, an der Hauptwelle der Windenergieanlage oder an einem Wellenadapter zwischen der Ausgangswelle des Prüfstandmotors und der Hauptwelle der Windenergieanlage angeordnet sein kann. Dafür können beispielsweise Dehnungsmessstreifen an der Ausgangswelle des Prüfstandmotors angebracht sein. Alternativ können auch Dehnungsmessstreifen an dem Adapter vorgesehen sein, der benötigt wird, um einen Antriebsstrang des Prüfstandmotors mit dem Antriebsstrang des Prüflings zu verbinden. Alternativ kann auch die Hauptwelle des Prüflings mit Dehnungsmessstreifen ausgerüstet werden. Selbstverständlich sind auch andere und/oder weitere Sensoren zum Ermitteln der vom Hauptwellen-Drehmoment abhängigen Größe denkbar, z.B. ein zusätzlicher Drehgeber zur Messung einer Torsion der Welle zwischen den zwei Drehgebern.

Während des ersten Versuchs können verschiedene Arbeitspunkte der Windenergieanlage angefahren werden. Während des zweitens Versuchs können ebenso verschiedene Arbeitspunkte der Windenergieanlage angefahren werden. Vorzugsweise können die angefahrenen Arbeitspunkte im ersten und im zweiten Versuch die gleichen sein. Durch das Anfahren verschiedener Arbeitspunkte kann jeweils eine Effizienz gemäß oben beschriebenem Verfahren für die unterschiedlichen angefahrenen Arbeitspunkte ermittelt werden. Typischerweise unterscheidet sich eine Effizienz in Abhängigkeit der verschiedenen Arbeitspunkte. Zum Ermitteln der Effizienz muss nur ein Arbeitspunkt angefahren werden, vorzugsweise werden jedoch mehrere verschiedene Arbeitspunkte angefahren. Dabei kann es vorteilhaft sein, den gesamten Leistungsbereich abzudecken, sodass die Arbeitspunkte möglichst weit über den Leistungsbereich verteilt liegen können. Beispielsweise werden dafür ein Arbeitspunkt bei 20% der Leistung, ein Arbeitspunkt bei 50 % der Leistung und ein Arbeitspunkt bei 100% der Leistung angefahren.

In dem zweiten Versuch kann das generatorseitige Ende des Antriebsstrangs derart angetrieben werden, dass die vom Hauptwellen-Drehmoment abhängige Größe im zweiten Versuch gleich der im ersten Versuch bestimmten vom Hauptwellen-Drehmoment abhängigen Größe ist. Dies kann den Vorteil haben, dass eine Messunsicherheit der vom Hauptwellen-Drehmoment abhängigen Größe gering gehalten werden kann. Die elektrische Leistung kann für den ersten und zweiten Versuch bestimmt werden. Dafür kann wie oben beschreiben ein Strom und eine Spannung gemessen werden. Der Generator der Windenergieanlage kann an unterschiedlichen Betriebspunkten (mit unterschiedlichem Leistungsniveau) betrieben werden. Ferner kann ein Gesamtverlust aus den im ersten und im zweiten Versuch gemessenen Größen bestimmt werden

$$P_{Loss.total} = P_{mech.A} - P_{mech.B} + P_{elec.B} - P_{elec.A}.$$

Falls die Beziehung der Wirkungsgrade an den zwei Betriebspunkten verfügbar ist, kann der gemessene Gesamtverlust entsprechend auf die zwei Tests verteilt werden. Andernfalls, wenn nicht genügend Informationen verfügbar sind, kann der Verlust entsprechend der Eingangsleistung gleichmäßig auf die beiden Tests aufgeteilt werden. Der Prozentsatz des Verlusts kann als Eigenschaft für den Arbeitspunkt als Mittelwert des Versuchs-Verlusts der beiden Versuche ermittelt werden.

In einer weiteren Ausführung des Verfahrens kann das generatorseitige Ende des Antriebsstrangs in dem zweiten Versuch derart angetrieben werden, dass die elektrische Leistung im zweiten Versuch gleich der im ersten Versuch bestimmten elektrischen Leistung ist. Dies kann den Vorteil haben, dass der Generator im ersten und zweiten Versuch im gleichen Betriebspunkt arbeitet, sodass der Wirkungsgrad in genau diesem Punkt gemessen werden kann und es im Wesentlichen keine, bzw. eine äußerst geringe, Unsicherheit darüber geben kann, in welchem Betriebspunkt der Wirkungsgrad gemessen wird. Ferner kann eine Verlust-Verteilung auf die beiden Versuche mit kleinerer Unsicherheit ermittelt werden. Der Gesamtverlust ergibt sich somit, wie oben, zu

$$P_{Loss.total} = P_{mech.A} - P_{mech.B} + P_{elec.B} - P_{elec.A}.$$

Eine Messunsicherheit der mechanischen Leistungen kann dabei gegenüber dem oben beschriebenen Verfahren, in dem die elektrischen Leistungen in dem ersten Versuch und zweiten Versuch gleich gehalten werden, demnach eine größere Rolle spielen.

Wie beim Verfahren zum Bestimmen einer Effizienz des Antriebsstrangs können beim Verfahren zur Kalibrierung einer Drehmomentmessung, insbesondere eines Antriebsstrangs einer Windenergieanlage, zwei Versuche, vorzugsweise an einem Prüfstand, durchgeführt werden. Wie bezüglich des Verfahrens zum Bestimmen einer Effizienz des Antriebsstrangs beschrieben, hat der Antriebsstrang ein motorseitiges Ende an einer mit einem Motor verbindbaren Hauptwelle und ein generatorseitiges Ende, zwischen denen ein Generator angeordnet ist. Der Motor ist vorzugsweise ein Motor des Prüfstands. Die Hauptwelle kann insbesondere eine mit einem Rotor einer Windenergieanlage verbindbare Windenergieanlagenhauptwelle sein.

In dem ersten Versuch wird das motorseitige Ende des Antriebsstrangs angetrieben und die vom Hauptwellen-Drehmoment abhängige Größe am motorseitigen Ende des Antriebsstrangs und eine elektrische Leistung $P_{elec}$ am generatorseitigen Ende des Antriebsstrangs bestimmt. Im zweiten Versuch wird das generatorseitige Ende des Antriebsstrangs angetrieben und ebenfalls die von dem Hauptwellen-Drehmoment abhängige Größe am motorseitigen Ende und die elektrische Leistung $P_{elec}$ am generatorseitigen Ende bestimmt. Aus den im ersten Versuch und im zweiten Versuch bestimmten elektrischen Leistungen und den vom Hauptwellen-Drehmoment abhängigen Größen, können Kalibrierparameter a und b, insbesondere unter Berücksichtigung mindestens einer aufgrund von Experimenten oder Erfahrung vorbestimmten Annahme, ermittelt werden. Zum Ermitteln der Kalibrierparameter werden der erste und der zweite Versuch für zumindest zwei Drehmomentenstufen durchgeführt.

Die unterschiedlichen Drehmomentstufen können dabei verschiedene Leistungsstufen definieren. Die Versuche können also für verschiedene Leistungsstufen wiederholt werden. Auf einer Drehmomentstufe wird also üblicherweise ein im Wesentlichen konstantes Drehmoment aufgebracht.

Allgemein kann, wie oben erwähnt, angenommen werden, dass ein Verhältnis k zwischen den Verlusten des ersten Versuchs und des zweiten Versuchs besteht

$$k = P_{Loss.A} / P_{Loss.B}$$

wobei

$$P_{Loss.A} = P_{mech.A} - P_{elec.A}, \text{ und } P_{Loss.B} = P_{elec.B} - P_{mech.B}.$$

Daraus folgt, dass

$$P_{mech.A} - P_{elec.A} = k(P_{elec.B} - P_{mech.B})$$

und

$$P_{mech.A} + kP_{mech.B} = kP_{elec.B} + P_{elecA}$$

Aus der bereits oben beschriebenen, spezielleren Annahme, dass die Effizienz im ersten und im zweiten Versuch die gleiche ist ($Effi = Effi_A = Effi_B$) kann

$$P_{mech.A}=P_{elec.A}/Effi$$

und

$$P_{mech.B}=P_{elec.B} \cdot Effi$$

und daraus

$$k_A \, P_{mech.A} + k_B \, P_{mech.B} = k_B \, P_{elec.A} + k_A \, P_{elec.B}$$

mit

$$k_A = Effi \, / \, (1 + Effi), \ k_B = 1 \, / \, (1 + Effi)$$

gefolgert werden.

Die mechanische Leistung kann durch eine Integration des Drehmoments $T$ über einen Winkel $\Theta$ geteilt durch die Zeit $t$ berechnet werden. Die mechanischen Leistungen für den ersten und zweiten Versuch können somit wie folgt berechnet werden:

$$\tilde{P}_{mech.A} = \frac{\tilde{E}_{mech.A}}{t_A} = \frac{\int_{\theta_0}^{\theta_A} T d\theta}{t_A}$$

$$\tilde{P}_{mech.B} = \frac{\tilde{E}_{mech.B}}{t_B} = \frac{\int_{\theta_0}^{\theta_B} T d\theta}{t_B}$$

wobei $T$ das Drehmoment und $t_A$ und $t_B$ die Zeitdauer des ersten bzw. zweiten Versuches sind. Dabei kann die Zeitdauer $t_A$ bzw. $t_B$ jeweils eine Zeitdauer beschreiben, in dem der erste bzw. zweite Versuch relativ stabile Werte, also Werte mit geringen Schwankungen, liefert.

Das Drehmoment kann mit der vom Drehmoment abhängigen Größe in Beziehung gesetzt werden. Ist die vom Drehmoment abhängige Größe beispielsweise durch einen Dehnungsmessstreifen ermittelt, kann die vom Drehmoment abhängige Größe eine Dehnung $\varepsilon$ sein. Dann kann sich das Drehmoment ergeben zu

$$T = a \cdot \varepsilon + b.$$

a und b können dabei zu kalibrierende Parameter sein.

Die mechanischen Leistungen für den ersten und zweiten Versuch können dann wie folgt geschrieben werden:

$$\tilde{P}_{mech.A} = \frac{\int_{\theta_0}^{\theta_A} (a\varepsilon + b) d\theta}{t_A} = Polynom1A(a,b)$$

$$\tilde{P}_{mech.B} = \frac{\int_{\theta_0}^{\theta_B} (a\varepsilon + b) d\theta}{t_B} = Polynom1B(a,b)$$

mit der Winkeländerung $\Theta$,
bzw.

$$\tilde{P}_{mech.A} = \frac{\int_0^{t_A} (a\varepsilon + b)\omega dt}{t_A} \qquad \tilde{P}_{mech.B} = \frac{\int_0^{t_B} (a\varepsilon + b)\omega dt}{t_B}$$

mit der Winkelgeschwindigkeit $\omega$,
und in die obige Gleichung unter der Annahme der gleichen Effizienz

$$k_A\, P_{mech.A} + k_B\, P_{mech.B} = k_B\, P_{elec.A} + k_A\, P_{elec.B}$$

oder in die allgemeinere Gleichung

$$P_{mech.A} + kP_{mech.B} = kP_{elec.B} + P_{elecA}$$

in der die Effizienzen des ersten und zweiten Versuchs nicht unbedingt als gleich angenommen sind, eingesetzt werden.

Für k kann, wie bereits oben beschrieben, ein Verteilungswert angenommen werden, der beschreibt, welchen Anteil die Verlustleistung $P_{Loss.A}$ des ersten Versuchs und welchen Anteil die Verlustleistung $P_{Loss.B}$ des zweiten Versuchs an der Gesamtverlustleistung $P_{Loss.total}$ hat:

$$P_{Loss.A} = k \cdot P_{Loss.total} \quad \text{bzw.} \quad P_{Loss.B} = k \cdot P_{Loss.total}.$$

Die Unbekannten dieser Gleichung können dann die Kalibrier-Parameter a, b und gegebenenfalls die Effizienz sein. Dabei kann die Effizienz für eine jeweilige Leistungsstufe beispielsweise mit der oben beschriebenen Methode bestimmt werden, als eins oder aus Erfahrungen angenommen werden. Für jede Leistungsstufe, für die jeweils ein erster und zweiter Versuch durchgeführt wurde, können somit die genannte allgemeinere Gleichung (mit einer Effizienz für jede Leistungsstufe) oder die speziellere Gleichung (für den Fall $Effi_A = Effi_B = Effi$) aufgestellt werden. Mit zumindest zwei Gleichungen können die Parameter a und b bestimmt werden,, so dass anhand der folgenden Beziehung unter Verwendung der Kalibrier-Parameter a und b und dem gemessenen Wert (hier die Dehnung $\varepsilon$) das Drehmoment bestimmt werden kann:

$$T = a \cdot \varepsilon + b.$$

Sind dabei die beiden Versuche für mehr als zwei Leistungsstufen durchgeführt worden, kann für verschiedene Leistungsstufen (durch die Indizes I, II, III ... markiert) ein Gleichungssystem aufgestellt werden:

$$\text{Polynom1}_I\, (a, b, Effi_I) = P_I$$

$$\text{Polynom1}_{II}\, (a, b, Effi_{II}) = P_{II}$$

$$\text{Polynom1}_{III}\, (a, b, Effi_{III}) = P_{III}.$$

Das Gleichungssystem kann unter Verwendung der Methode der kleinsten Quadrate gelöst werden, sodass anhand der ermittelten Konstanten a, b das Drehmoment berechnet werden kann.

Das Verfahren zur Drehmomentkalibrierung kann, insbesondere wenn noch keine Kalibrierung vorgenommen wurde und nur ein "Messrohsignal", z. B. der Dehnung vorhanden ist, optimiert werden. Die Effizienz ist dabei noch nicht bestimmt. Ein anderer Ausgangspunkt für eine Optimierung des Verfahrens zur Kalibrierung des Drehmoments ist, dass schon ein kalibriertes Drehmomentsignal existiert, aber die Genauigkeit noch nicht ausreichend ist. Dafür kann ausgehend von einer Annahme, dass die Effizienz gleich eins ist oder eine Effizienz ein vorgegebener Erfahrungswert ist die Kalibrierparameter a und b aus der oben angegebenen Beziehung zwischen dem Drehmoment und dem "Rohsignal $\varepsilon$

bestimmt werden. Daraufhin können entsprechend des vorher beschriebenen Verfahrens zur Bestimmung der Effizienzen, die Effizienzen für zumindest zwei Leistungsstufen ermittelt werden. Dabei werden, wie oben beschrieben, für jede Leistungsstufe zwei Versuche durchgeführt und die Drehmomente bzw. drehmomentabhängigen Größen und elektrischen Leistungen im ersten und im zweiten Versuch gemessen. Mit den neu berechneten Effizienzen für alle Leistungsstufen können die Kalibrierparameter bzw. der Beziehung zwischen gemessenen Signal und Drehmoment korrigiert bzw. neu bestimmt werden. Dies kann beliebig oft wiederholt werden, bis die ermittelten Kalibrierparameter nur noch geringfügig von den vormals ermittelten Kalibrierparametern abweichen.

Das jeweilige Drehmoment kann, wie oben beschrieben, aus der Beziehung zwischen Kalibrierparametern, Messsignal und Drehmoment bestimmt werden

Nachfolgend wird anhand von Figuren ein Ausführungsbeispiel beschrieben des Verfahrens beschrieben und ein beispielhafter Prüfstandaufbau erläutert. Es zeigen

Fig. 1 eine schematische Zeichnung eines Antriebstrangs einer Windenergieanlage,

Fig. 2 die schematische Zeichnung des Antriebsstrangs der Figur 1, wobei der Kraftfluss umgekehrt ist,

Fig. 3 schematische Treppenkurven, die die Energie im ersten bzw. zweiten Versuch veranschaulicht, wobei die mechanische Energie an einem ersten Messpunkt die gleiche ist,

Fig. 4 schematische Treppenkurven, die die Energie im ersten bzw. zweiten Versuch veranschaulicht, wobei die elektrische Energie an einem ersten Messpunkt die gleiche ist,

Fig. 5 Treppenkurven von zwei Versuchen, wobei im zweiten Versuch der Generator derart angetrieben wird, dass sich die Energie in den jeweiligen Messpunkten für den ersten und den zweiten Versuchs unterscheiden,

Fig. 6 Treppenkurven von zwei Versuchen im Hinblick auf die mittlere Leistung und

Figur 7 ein Flussdiagramm zur Erläuterung des Verfahrens zur optimierten Drehmomentkalibrierung.

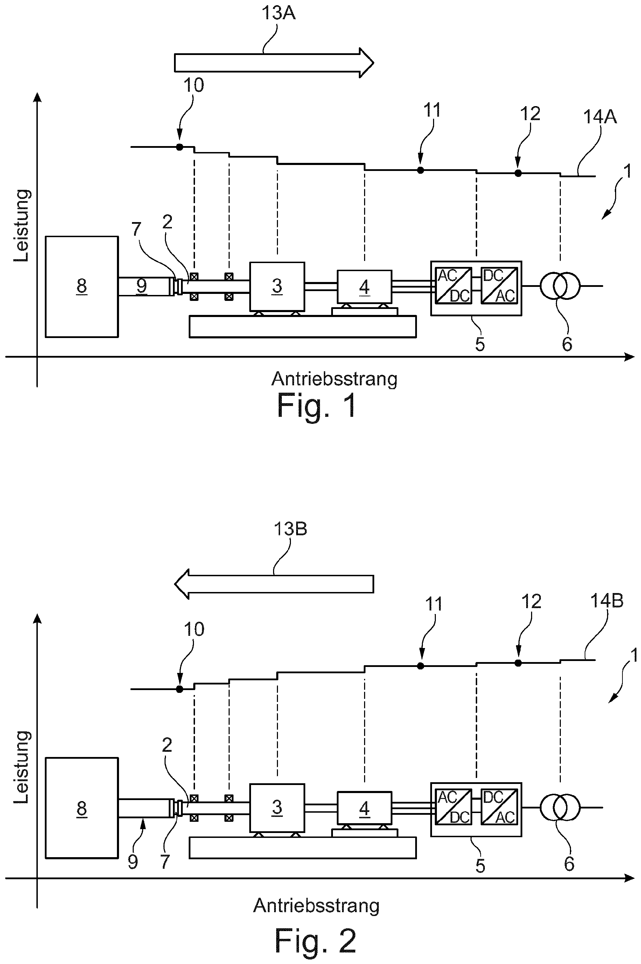

Figur 1 zeigt eine schematische Zeichnung eines Antriebstrangs 1 einer Windenergieanlage mit einer Hauptwelle 2, die über ein Getriebe 3 mit einem Generator 4 verbunden ist. Ferner ist die Hauptwelle über einen Adapter 7 mit einer Ausgangswelle 9 eines Prüfstandmotors 8 gekoppelt. Der Generator 4 ist ferner mit einem Umrichter 5 verbunden, der wiederum an einem Transformator 6 angeschlossen ist. Entlang des Antriebsstrangs 1 sind drei Messstellen 10, 11, und 12 gekennzeichnet. An der ersten Messstelle 10 wird mittels eines Sensors eine vom Drehmoment abhängige Größe, beispielsweise eine Dehnung mittels eines Dehnungsmessstreifens, gemessen. Dafür ist im gezeigten Beispiel der Sensor an der Hauptwelle angeordnet. Der Sensor kann in einer anderen Ausführung beispielsweise auch an dem Adapter 7 oder an der Motorausgangswelle 9 platziert sein. Die zweite Messstelle 11 liegt zwischen dem Generator 4 und dem Umrichter 5. Hier kann ein elektrischer Strom und eine elektrische Spannung des Generators gemessen werden, sodass daraus eine elektrische Leistung berechnet werden kann. Alternativ zur Messstelle 11 kann auch an der Messstelle 12, die zwischen dem Umrichter 5 und Transformator 6 oder an einer dem Umrichter abgewandten Seite des Transformators 6 liegt, ein Strom und eine elektrische Spannung gemessen werden, sodass etwaige Verluste des Umrichters mit in die berechnete elektrische Leistung einfließen.

Zum Ermitteln einer Effizienz des Antriebsstrangs 1 wird ein erster Versuch durchgeführt, bei dem der Motor 8 die Hauptwelle 2 antreibt. Die Richtung des Kraftflusses ist durch den Pfeil 13A gezeigt. Anhand einer Treppenkurve 14A sind stufenweise Verluste der verschiedenen Bauteile des Antriebsstrangs schematisch dargestellt. Die Leistung an der Messstelle 10 ist damit größer als die Leistung an der Messstelle 11 und diese ist größer als die gemessene Leistung an der Messstelle 12.

Figur 2 zeigt ebenfalls die schematische Zeichnung des Antriebsstrangs 1. In einem zweiten Versuch wird dieser Antriebsstrang 1 von dem Generator 4 als Motor angetrieben und der Prüfstand läuft im Generatorbetrieb. Der Kraftfluss ist durch den Pfeil 13B gezeigt. Aufgrund des gegenüber dem ersten Versuch umgekehrten Antriebs ist die gemessene Leistung an der Messstelle 12 größer als die gemessene Leistung an der Messstelle 11 und die dort gemessene Leistung ist wiederum größer als die Leistung an der Messstelle 10, wie in der Treppenkurve 14B veranschaulicht ist.

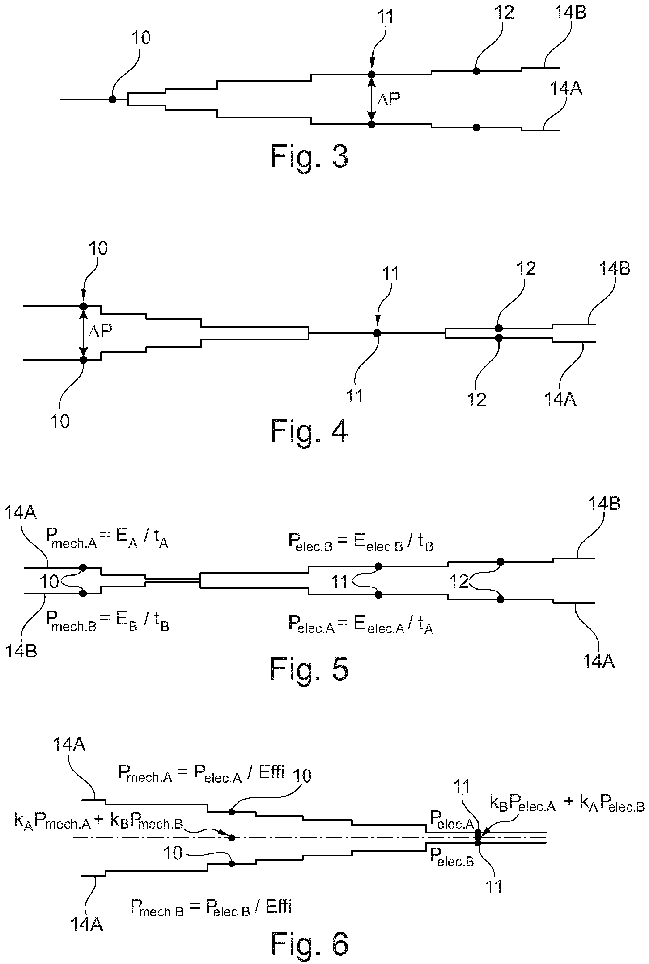

Zum Ermitteln der Effizienz werden also grundsätzlich zwei Versuche durchgeführt. Die Versuche werden jeweils derart durchgeführt, dass der Antriebsstrang auf der gleichen oder zumindest im Wesentlichen gleichen Leistungsstufe angetrieben wird. Weiterhin sind unterschiedliche Messszenarien möglich. In einem ersten Messszenario wird im zweiten Versuch das generatorseitige Ende derart angetrieben, dass die mechanischen Leistungen des ersten und zweiten Versuches gleich sind. In einem weiteren Messszenario werden die elektrischen Leistungen des ersten und des zweiten Versuches gleich gehalten. Diese Szenarien sind in den Figuren 3 bzw. 4 gezeigt. Bei einer weiteren Möglichkeit kann der Antriebsstrang im zweiten Versuch jedoch auch angetrieben werden, ohne dass die mechanischen oder die elektrischen Leistungen für den Versuch eins und zwei konstant gehalten werden. Dieses Szenario ist in der Figur 5 gezeigt.

Die Figur 3 zeigt die Treppenkurven des ersten und des zweiten Versuches 14A und 14B gemäß dem ersten Messszenario, wobei im zweiten Versuch der Generator 4 derartig angetrieben wird, dass die mechanische Leistung am ersten Messpunkt 10 im ersten Versuch gleich der mechanischen Leistung am ersten Messpunkt 10 im zweiten Versuch ist. D.h. es wird der Messwert für das gemessene mechanische Drehmoment in beiden Versuchen kontant und gleich gehalten. Somit ergibt sich am Messpunkt 11 ein Gesamtverlust ∆P zwischen dem ersten und dem zweiten Versuch, der durch Messen des Stroms und der Spannung jeweils in den beiden Versuchen erfasst wird.

Die Figur 4 zeigt die Treppenkurven des ersten und des zweiten Versuches 14A und 14B, wobei im zweiten Versuch der Generator 4 derartig angetrieben wird, dass die elektrische Leistung am zweiten Messpunkt 11 im ersten Versuch gemäß dem zweiten Messszenario gleich der elektrischen Leistung am zweiten Messpunkt 11 im zweiten Versuch ist, d.h. es wird die elektrische Leistung jeweils in den zwei Versuchen gemessen, wobei im zweiten Versuch die elektrische Leistung auf diejenige des ersten Versuchs eingestellt wird. Somit ergibt sich am Messpunkt 10 einen Gesamtverlust in der mechanischen Leistung ∆P zwischen dem ersten und dem zweiten Versuch.

In Figur 5 sind die Treppenkurven 14A und 14B von zwei Versuchen dargestellt, wobei im zweiten Versuch der Generator 4 derart angetrieben wird, dass die Energie in den jeweiligen Messpunkten 10, 11 und 12 für den ersten und den zweiten Versuchs unterscheiden. Die in der Figur dargestellten elektrischen und mechanischen Leistungen sind die über die Dauer der Tests gemittelten Leistungen, d.h. die Energien dividiert durch Zeitdauern der Tests.

Mit einem Inkrementalgeber wird für den ersten Versuch und für den zweiten Versuch eine Winkelposition gemessen, aus der ein Drehmoment T bzw. eine

$$\tilde{P}_{mech.A} = \frac{\tilde{E}_{mech.A}}{t_A} = \frac{\int_{\theta_0}^{\theta_A} T d\theta}{t_A}$$

$$\tilde{P}_{mech.B} = \frac{\tilde{E}_{mech.B}}{t_B} = \frac{\int_{\theta_0}^{\theta_B} T d\theta}{t_B}$$

Energie und/oder Leistung ermittelt werden kann. Ferner wird ein Strom I und eine Spannung U jeweils für den ersten und den zweiten Versuch gemessen. Aus diesen gemessen Größen kann eine mechanische Leistung und eine elektrische Leistung

$$P_{elec.A} = E_{elec.A}/t_A$$

für den ersten Versuch und zu

$$P_{elec.B} = E_{elec.B}/t_B$$

berechnet werden. Die Tilden, die in der obigen Gleichungen gemittelte Werte angeben, sind zur Vereinfachung in den folgenden Gleichungen teilweise weggelassen.

Die Versuchs-Verlustleistung für den ersten Versuch ergibt sich zu

$$P_{Loss.A} = P_{mech.A} - P_{elec.A}$$

Und die Versuchs-Verlustleistung für den zweiten Versuch ergibt sich zu

$$P_{Loss.B} = P_{elec.B} - P_{mec.hB}.$$

Durch eine Addition der Versuchs-Verlustleistungen $P_{Loss.A}$ und $P_{Loss.B}$ kann eine Gesamtverlustleistung

$P_{Loss.total}$ berechnet werden:

$$P_{Loss.total} = P_{Loss.A} + P_{Loss.B} = P_{mech.A} - P_{mech.B} + P_{elec.B} - P_{elec.A}.$$

Mit

$$\tilde{P}_{Loss.A} = \frac{\tilde{P}_{mech.A}}{\tilde{P}_{mech.A} + \tilde{P}_{elec.B}} \tilde{P}_{Loss.total}$$

$$\tilde{P}_{Loss.B} = \frac{\tilde{P}_{elec.B}}{\tilde{P}_{mech.A} + \tilde{P}_{elec.B}} \tilde{P}_{Loss.total}$$

wird dann ein Versuchsverlust $P_{Loss.A}$ und $P_{Loss.B}$ für den jeweiligen Versuch ermittelt.
Die ermittelten Werte können dann in

$$Effi = \frac{\tilde{P}_{elec.A}}{\tilde{P}_{mech.A}} = \frac{\tilde{P}_{elec.A}}{\tilde{P}_{elec.A} + \tilde{P}_{Loss.A}}$$

oder

$$Effi = \frac{\tilde{P}_{mech.B}}{\tilde{P}_{elec.B}} = \frac{\tilde{P}_{elec.B} - \tilde{P}_{Loss.B}}{\tilde{P}_{elec.B}}$$

eingesetzt werden, um die Effizienz *Effi* zu erhalten. Dabei werden $P_{mech.A}$, $P_{mech.B}$, $P_{elec.B}$ *und* $P_{elec.A}$ gemessen, sodass daraus $P_{Loss.total}$ ermittelt werden kann. Eine Verteilung des $P_{Loss.total}$ ergibt $P_{Loss.A}$ oder $P_{Loss.B}$.
Die Effizienz lässt sich aus $P_{Loss.A}$ und $P_{elec.A}$ oder aus $P_{Loss.B}$ und $P_{elec.B}$ berechnen. Normalerweise ist dabei eine elektrische Messung genauer, sodass bevorzugt $P_{elec.A}$ *oder* $P_{elec.B}$ zum Ermitteln der Effizienz genutzt wird.
Fig. 6 zeigt die zwei Treppenkurven 14A und 14B. Die elektrische Leistung an der Messstelle 11 wird im ersten Versuch im Wesentlichen gleich der Leistung an der Messstelle 11 im zweiten Versuch gesetzt. Die Leistung des ersten und zweiten Versuchs kann für die Messstelle 10 beschrieben werden als

$$P_{mech.total} = k_A \, P_{mech.A} + k_B \, P_{mech.B}$$

und für die Messstelle 11 beschrieben werden als

$$P_{elec.total} = k_B \, P_{elec.A} + k_A \, P_{elec.B}$$

wobei
$k_A$ = *Effi* / (1 + *Effi),* $k_B$ = 1 / (1 + *Effi*) und *Effi* die Effizienz des Antriebsstrangs ist.
Dabei zeigt die Figur 6 die Treppenkurven 14A und 14B die entstehen, wenn die Annahme gemacht wird, dass die Effizienz des ersten Versuchs gleich der Effizienz des zweiten Versuchs ist (Effi$_A$=Effi$_B$=Effi), sodass die folgende Gleichung gilt:

$$k_A \, P_{mech.A} + k_B \, P_{mech.B} = k_B \, P_{elec.A} + k_A \, P_{elec.B}.$$

Wenn die beiden Versuche so durchgeführt werden, dass die Windenergieanlage im ersten und im zweiten Versuch an einem ähnlichen Betriebspunkt arbeitet, sollten die Leistungsverluste der beiden Tests ebenfalls ähnlich sein oder ein bestimmtes Verhältnis aufweisen. Der Verlust in jedem Test kann mit einer gewissen Unsicherheit als die Hälfte oder ein Teil des Gesamtverlustes angenommen werden. Die Unsicherheit, die durch die Annahme der Verluste in zwei Betriebsarten eingeführt wird, kann mit dem Verhalten des Generators und anderer wichtiger mechanischer und elektrischer Komponenten der Turbine analysiert werden.

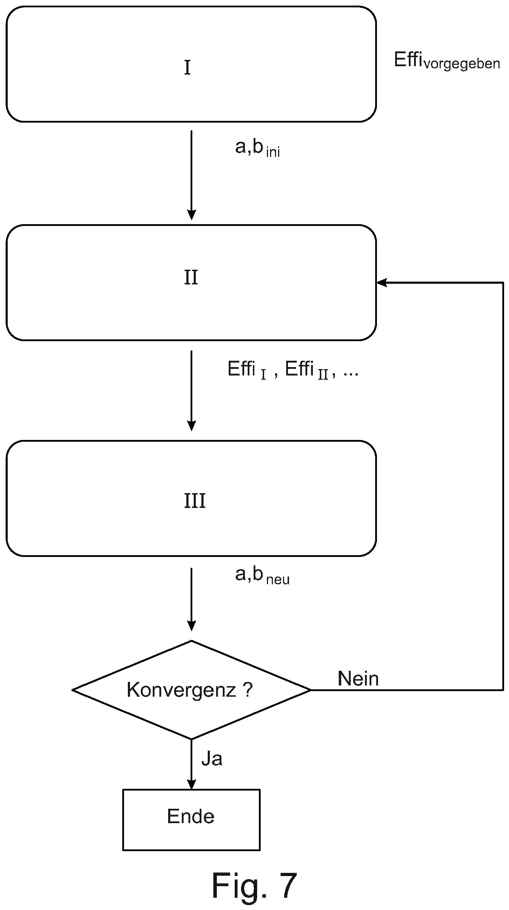

Die Figur 7 zeigt ein Flussdiagramm zur Erläuterung des Verfahrens zur optimierten Drehmomentkalibrierung. Grundlage für dieses Verfahren sind die zwei Versuche, die anhand der vorherigen Figuren erläutert wurden.

In Schritt I können zunächst ausgehend von einer vorgegebenen Effizienz, die ggf. aus vorherigen Experimenten gefunden wurde, und einem Messwert $\varepsilon$, Kalibrierfaktoren a, $b_{ini}$ bestimmt werden.

Daraufhin können in einem zweiten Schritt II unter Verwendung einer drehmomentabhängigen Größe die Effizienzen ($Effi_I$, $Effi_{II}$, ...) für zumindest zwei Leistungsstufen ermittelt werden. Dabei werden für jede Leistungsstufe die zwei Versuche durchgeführt und die drehmomentabhängigen Größen und elektrischen Leistungen im ersten und im zweiten Versuch gemessen.

In einem dritten Schritt III können die Kalibrierparameter a ,$b_{ini}$ unter Verwendung der ermittelten Effizienz neu berechnet werden und dies für alle Leistungsstufen. Weichen die neu berechneten Kalibrierparameter a, $b_{neu}$ stark den zuvor bestimmten Kalibrierparametern ab, können erneut die Effizienzen für die jeweiligen Leistungsstufen bestimmt werden und diese Ergebnisse mit den vormaligen Werten verglichen werden. Dies kann beliebig oft wiederholt werden, bis die ermittelten Kalibrierparameter nur noch geringfügig von den zuvor bestimmten abweicht. Damit kann eine Drehmomentmessung auch für große Drehmomente kalibriert und mit großer Genauigkeit durchgeführt werden.

Die beschriebene Drehmomentkalibrierung kann wie oben beschrieben für Antriebsstränge von Windenergieanlagen, aber auch für anderweitige Antriebstränge anderer elektrischer Maschinen genutzt werden.

Dabei ist es wichtig, dass beide Seiten, also der Prüfstandmotor und der Generatormotor, sowohl im Motor- als auch im Generatorbetrieb laufen können. Für eine bessere Genauigkeit der Kalibrierung, kann die im ersten Versuch als Generator betriebene Maschine so ausgewählt sein, dass die Leistungsverluste in beiden Modi (also im ersten und im zweiten Versuch) möglichst ähnlich sind.

Eine spezielle Anwendung kann es sein, dass zwei elektrischen Maschinen von der gleichen Art verwendet werden. Der Prüfstand ist hier mit einer der Maschinen ersetzt. Die beiden Maschinen laufen im sogenannten "Back-to-Back"Modus, wobei ein zu kalibrierender Messkörper zwischen den Maschinen auf dem Antriebstrang installiert ist.

## Patentansprüche

1. Verfahren zum Ermitteln einer Effizienz eines Antriebsstrangs (1), insbesondere eines Antriebstrangs (1) einer Windenergieanlage, wobei der Antriebstrang (1) ein motorseitiges Ende an einer mit einem Motor verbindbaren Hauptwelle (2) und ein generatorseitiges Ende aufweist, zwischen denen ein Generator (4) angeordnet ist, wobei der Motor und der Generator (4) sowohl im Motor- als auch im Generatorbetrieb laufen können,

   wobei in einem ersten Versuch das motorseitige Ende des Antriebstrangs (1) angetrieben wird und eine vom Hauptwellen-Drehmoment abhängige Größe am motorseitigen Ende des Antriebstrangs (1) und eine elektrische Leistung $P_{elec}$ am generatorseitigen Ende des Antriebstrangs (1) bestimmt werden,
   **dadurch gekennzeichnet,**
   **dass** in einem zweiten Versuch das generatorseitige Ende des Antriebstrangs (1) von dem Generator als Motor angetrieben wird und ebenfalls die von dem Hauptwellen-Drehmoment abhängige Größe am motorseitigen Ende und die elektrische Leistung $P_{elec}$ am generatorseitigen Ende bestimmt werden und aus den im ersten Versuch und im zweiten Versuch bestimmten elektrischen Leistungen und den vom Hauptwellen-Drehmoment abhängigen Größen eine Effizienz, insbesondere unter Berücksichtigung mindestens einer aufgrund von Experimenten oder Erfahrung vorbestimmten Annahme ermittelt wird.

2. Verfahren zur Kalibrierung von Drehmomentmessungen eines Antriebstrangs, insbesondere eines Antriebstrangs einer Windenergieanlage, an einem Prüfstand, wobei der Antriebstrang ein motorseitiges Ende an einer mit einem Motor verbindbaren Hauptwelle (2) und ein generatorseitiges Ende aufweist, zwischen denen ein Generator (4) angeordnet ist, wobei der Motor und der Generator (4) sowohl im Motor- als auch im Generatorbetrieb laufen können,

   wobei in einem ersten Versuch das motorseitige Ende des Antriebstrangs (1) angetrieben wird und eine vom Hauptwellen-Drehmoment abhängige Größe am motorseitigen Ende des Antriebstrangs (1) und eine elektrische Leistung $P_{elec}$ am generatorseitigen Ende des Antriebstrangs (1) bestimmt werden,
   **dadurch gekennzeichnet,**
   **dass** in einem zweiten Versuch das generatorseitige Ende des Antriebstrangs (1) von dem Generator als Motor angetrieben wird und ebenfalls die von dem Hauptwellen-Drehmoment abhängige Größe am motorseitigen Ende und die elektrische Leistung $P_{elec}$ am generatorseitigen Ende bestimmt werden und aus den im ersten Versuch und im zweiten Versuch bestimmten elektrischen Leistungen $P_{elec}$ und den vom Hauptwellen-Drehmoment abhängigen Größen Kalibrierparameter a und b, insbesondere unter Berücksichtigung mindestens einer aufgrund von Experimenten oder Erfahrung vorbestimmten Annahme ermittelt werden, wobei der erste und der zweite Versuch für zumindest zwei Drehmomentenstufen durchgeführt werden.

3. Verfahren gemäß Anspruch 1 oder 2, **dadurch gekennzeichnet, dass** eine Annahme zur Bestimmung der Effizienz bzw. zur Kalibrierung einer Drehmomentmessung die Annahme ist, dass die Effizienz des ersten Versuchs gleich der Effizienz des zweiten Versuchs ist.

4. Verfahren gemäß Anspruch 1 oder 2, **dadurch gekennzeichnet, dass** eine Annahme zur Bestimmung der Effizienz bzw. zur Kalibrierung einer Drehmomentmessung die Annahme ist, dass eine Verlustleistung der einen der beiden Versuche ein Bruchteil der Gesamtverlustleistung der beiden Versuche, insbesondere die Hälfte der Gesamtverlustleistung ist.

5. Verfahren gemäß einem der vorangehenden Ansprüche, **dadurch gekennzeichnet, dass** zum Ermitteln des Drehmoments der Hauptwelle (2) die vom Hauptwellen-Drehmoment abhängige Größe mittels eines Sensors, vorzugsweise mit einem Dehnungsmessstreifen, gemessen wird
und/oder
dass eine Winkelposition $\Theta$ der Hauptwelle oder ihre Rotationsgeschwindigkeit $\omega$, vorzugsweise mit einem Inkrementalgeber, gemessen wird.

6. Verfahren gemäß einem der vorangehenden Ansprüche, **dadurch gekennzeichnet, dass** aus der vom Hauptwellen-Drehmoment abhängigen Größe eine mechanische Leistung für den ersten und für den zweiten Versuch ermittelt wird.

7. Verfahren gemäß einem der vorangehenden Ansprüche, **dadurch gekennzeichnet, dass** zur Bestimmung der elektrischen Leistung eine Spannung und ein Strom am generatorseitigen Ende zwischen dem Generator (4) und einem mit diesem verbundenen Umrichter (5) oder an der vom Generator (4) abgewandten Seite des Umrichters (5) gemessen werden.

8. Verfahren gemäß einem der vorangehenden Ansprüche , **dadurch gekennzeichnet, dass** für den ersten Versuch und für den zweiten Versuch jeweils eine Versuchs-Verlustleistung ermittelt wird, diese beiden ermittelten Versuchs-Verlustleistungen zu einer Gesamtverlustleistung addiert werden und die Effizienz unter Verwendung der Gesamtverlustleistung berechnet wird.

9. Verfahren gemäß einem der vorangehenden Ansprüche, **dadurch gekennzeichnet, dass** zur Bestimmung der vom Hauptwellen-Drehmoment abhängigen Größe das Messsignal des Sensors ausgewertet wird, der an einer Ausgangswelle des Motors, insbesondere eines Prüfstandmotors (8), an der Hauptwelle (2), insbesondere einer Windenergieanlage oder an einem Wellenadapter zwischen der Ausgangswelle des Motors und der Hauptwelle (2) angeordnet ist.

10. Verfahren gemäß einem der vorangehenden Ansprüche, **dadurch gekennzeichnet, dass** während des ersten Versuchs verschiedene Arbeitspunkte des Antriebstrangs (1), insbesondere einer Windenergieanlage, angefahren werden und während des zweitens Versuchs verschiedene Arbeitspunkte des Antriebstrangs (1), insbesondere der Windenergieanlage, angefahren werden, wobei die angefahrenen Arbeitspunkte im ersten und zweiten Versuch vorzugsweise die gleichen sind.

11. Verfahren gemäß einem der vorangehenden Ansprüche, **dadurch gekennzeichnet, dass** in dem zweiten Versuch das generatorseitige Ende des Antriebstrangs (1) derart angetrieben wird, dass die vom Hauptwellen-Drehmoment abhängige Größe im zweiten Versuch gleich der im ersten Versuch bestimmten vom Hauptwellen-Drehmoment abhängigen Größe ist.

12. Verfahren gemäß einem der Ansprüche 1 bis 10, **dadurch gekennzeichnet, dass** in dem zweiten Versuch das generatorseitige Ende des Antriebstrangs (1) derart angetrieben wird, dass die elektrische Leistung im zweiten Versuch gleich der im ersten Versuch bestimmten elektrischen Leistung ist.

13. Verfahren gemäß einem der vorhergehenden Ansprüche, wobei unter Verwendung der vom Hauptwellen-Drehmoment abhängigen Größe eine mechanische Leistung $P_{mechA}$ und $P_{mechB}$ in Abhängigkeit zweier Konstanten a und b jeweils für den ersten Versuch und für den zweiten Versuch bestimmt werden

$$\bar{P}_{mech.A} = \frac{\int_{\theta_0}^{\theta_A}(a\varepsilon + b)d\theta}{t_A}$$

$$\bar{P}_{mech.B} = \frac{\int_{\theta_0}^{\theta_B}(a\varepsilon + b)d\theta}{t_B}$$

und anhand

$$P_{mech.A} - P_{elec.A} = k(P_{elec.B} - P_{mech.B})$$

und

$$P_{mech.A} + kP_{mech.B} = kP_{elec.B} + P_{elecA}$$

wobei k ein Verhältnis zwischen den Verlusten des ersten Versuchs und des zweiten Versuchs ist, die Kalibrierparameter a und b zum Bestimmen eines Drehmoments

$$T = a\,\varepsilon + b$$

ermittelt werden, wobei T das Drehmoment und ε die vom Hauptwellen-Drehmoment abhängige gemessene Größe ist.

14. Verfahren nach einem der vorhergehenden Ansprüche, **dadurch gekennzeichnet, dass** jede der Drehmomentstufen eine unterschiedliche Leistungsstufe des Antriebsstrangs (1) definiert.

15. Verfahren gemäß einem der vorhergehenden Ansprüche, wobei ausgehend von einer vorgegebenen Effizienz die Kalibrierparameter bestimmt werden, dann Effizienzen für zumindest zwei Leistungsstufen ermittelt werden und anschließend erneut die Kalibrier-Parameter bestimmt werden und die letzten zwei Schritte solange wiederholt werden bis die Abweichung zwischen der letzten und der vorangehenden Bestimmung kleiner als ein vorbestimmter Wert ist.

**Claims**

1. A method for determining an efficiency of a drivetrain (1), in particular a drivetrain (1) of a wind turbine, wherein the drivetrain (1) has a motor-side end on a main shaft (2) connectable to a motor and a generator-side end, between which ends a generator (4) is arranged, wherein the engine and the generator (4) may run both in motor and in generator operation,

wherein in a first test, the motor-side end of the drivetrain (1) is driven and a variable dependent on the main shaft torque is determined at the motor-side end of the drivetrain (1) and an electrical power $P_{elec}$ is determined at the generator-side end of the drivetrain (1),
**characterized in that**
in a second test, the generator-side end of the drivetrain (1) is driven by the generator as a motor, and the variable dependent on the main shaft torque is likewise determined at the motor-side end and the electrical power $P_{elec}$ is determined at the generator-side end, and an efficiency is determined from the electrical power values the variables dependent on the main shaft torque determined in the first test and in the second test, in particular while taking into consideration at least one assumption predetermined on the basis of experiments or experience.

2. A method for calibrating torque measurements of a drivetrain, in particular a drivetrain of a wind turbine, on a test rig, wherein the drivetrain has a motor-side end on a main shaft (2) connectable to a motor and a generator-side end, between which ends a generator (4) is arranged, wherein the engine and the generator (4) may run both in motor and in generator operation,

wherein in a first test, the motor-side end of the drivetrain (1) is driven and a variable dependent on the main shaft torque is determined at the motor-side end of the drivetrain (1) and an electrical power $P_{elec}$ is determined at the generator-side end of the drivetrain (1),
**characterized in that**
in a second test, the generator-side end of the drivetrain (1) is driven by the generator as a motor, and the variable dependent on the main shaft torque is likewise determined at the motor-side end and the electrical power $P_{elec}$ is determined at the generator-side end, and calibration parameters a and b are determined from the electrical power values $P_{elec}$ and the variables dependent on the main shaft torque determined in the first test and in the second test, in particular while taking into consideration at least one assumption predetermined on the basis of experiments or experience, wherein the first and the second test are carried out for at least two torque settings.

3. The method according to claim 1 or 2, **characterized in that** an assumption for determining the efficiency or for calibrating a torque measurement is the assumption that the efficiency of the first test is equal to the efficiency of the second test.

4. The method according to claim 1 or 2, **characterized in that** an assumption for determining the efficiency or for calibrating a torque measurement is the assumption that a power loss of one of the two tests is a fraction of the total power loss of the two tests, in particular is half of the total power loss.

5. The method according to one of the preceding claims, **characterized in that** to determine the torque of the main shaft (2), the variable dependent on the main shaft torque is measured by means of a sensor, preferably using a strain gauge,
and/or
that an angular position θ of the main shaft or its rotational speed ω is measured, preferably using an incremental encoder.

6. The method according to one of the preceding claims, **characterized in that** a mechanical power is determined from the variable dependent on the main shaft torque for the first and for the second test.

7. The method according to one of the preceding claims, **characterized in that**, to determine the electrical power, a voltage and a current are measured at the generator-side end between the generator (4) and a converter (5) connected to the same, or at the side of the converter (5) facing away from the generator (4).

8. The method according to one of the preceding claims, **characterized in that** for the first test and for the second test a test power loss is ascertained, these two ascertained test power losses are added to give an overall power loss and the efficiency is calculated with use of the overall power loss.

9. The method according to one of the preceding claims, **characterized in that**, to determine the variable dependent on the main shaft torque, the measurement signal of the sensor is evaluated, which is arranged at an output shaft of the motor, in particular of a test rig motor (8), at the main shaft (2), in particular of a wind turbine, or at a shaft adapter between the output shaft of the motor and the main shaft (2).

10. The method according to one of the preceding claims, **characterized in that** different operating points of the drivetrain (1), in particular of a wind turbine, are approached during the first test, and that different operating points of the drivetrain (1), in particular of a wind turbine, are approached during the second test, wherein the operating points approached in the first and the second test are preferably the same.

11. The method according to one of the preceding claims, **characterized in that** the generator-side end of the drivetrain (1) is driven in the second test in such a way that the variable dependent on the main shaft torque in the second test is equal to the variable dependent on the main shaft torque determined in the first test.

12. The method according to one of claims 1 to 10, **characterized in that** the generator-side end of the drivetrain (1) is driven in such a way in the second test that the electrical power in the second test is equal to the electrical power determined in the first test.

13. The method according to any one of the preceding claims, wherein, using the main shaft torque dependent variable, a mechanical power $P_{mechA}$ and $P_{mechB}$ are determined as a function of two constants a and b for the first test and for the second test, respectively

$$\bar{P}_{mech.A} = \frac{\int_{\theta_0}^{\theta_A} (a\varepsilon + b)d\theta}{t_A}$$

$$\bar{P}_{mech.B} = \frac{\int_{\theta_0}^{\theta_B} (a\varepsilon + b)d\theta}{t_B}$$

and using

$$P_{mech.A} - P_{elec.A} = k(P_{elec.B} - P_{mech.B})$$

and

$$P_{mech.A} + kP_{mech.B} = kP_{elec.B} + P_{elecA}$$

wherein k is a ratio between the losses of the first test and the second test, the calibration parameters a and b for determining a torque

$$T = a\,\varepsilon + b$$

are determined, wherein T is the torque and the measured variable dependent on the main shaft torque.

14. The method according to one of the preceding claims, **characterized in that** each of the torque settings defines a different power level of the drivetrain (1).

15. Method according to one of the preceding claims, wherein starting from a predetermined efficiency, the calibration parameters are determined, then efficiencies are determined for at least two power levels and subsequently the calibration parameters are determined again, and the last two steps are repeated until the deviation between the last and the preceding determination is smaller than a predetermined value.

**Revendications**

1. Procédé de détermination d'une efficacité d'une chaîne cinématique (1), en particulier d'une chaîne cinématique (1) d'une éolienne, la chaîne cinématique (1) présentant une extrémité côté moteur sur un arbre principal (2) qui peut être relié à un moteur et une extrémité côté générateur, entre lesquelles un générateur (4) est agencé, le moteur et le générateur (4) pouvant fonctionner à la fois en mode moteur et en mode générateur,

dans lequel dans un premier essai, l'extrémité côté moteur de la chaîne cinématique (1) est entraînée et une grandeur dépendant du couple de l'arbre principal au niveau de l'extrémité côté moteur de la chaîne cinématique (1) et une puissance électrique $P_{elec}$ au niveau de l'extrémité côté générateur de la chaîne cinématique (1) sont déterminées,

**caractérisé en ce que**

dans un second essai, l'extrémité côté générateur de la chaîne cinématique (1) est entraînée par le générateur en tant que moteur et de plus la grandeur dépendant du couple de l'arbre principal au niveau de l'extrémité côté moteur et la puissance électrique $P_{elec}$ au niveau de l'extrémité côté générateur sont déterminées, et à partir des puissances électriques déterminées au premier essai et au second essai et des grandeurs dépendant des couples de l'arbre principal, une efficacité est déterminé, en particulier en tenant compte d'au moins une hypothèse prédéterminée sur la base d'expériences ou d'un savoir-faire.

2. Procédé d'étalonnage de mesures de couple d'une chaîne cinématique, en particulier d'une chaîne cinématique d'éolienne, sur un banc d'essai, la chaîne cinématique présentant une extrémité côté moteur sur un arbre principal (2) pouvant être relié à un moteur et une extrémité côté générateur, entre lesquelles un générateur (4) est agencé, le moteur et le générateur (4) pouvant fonctionner à la fois en mode moteur et en mode générateur,

dans lequel dans un premier essai, l'extrémité côté moteur de la chaîne cinématique (1) est entraînée et une grandeur dépendant du couple de l'arbre principal au niveau de l'extrémité côté moteur de la chaîne cinématique (1) et une puissance électrique $P_{elec}$ au niveau de l'extrémité côté générateur de la chaîne cinématique (1) sont déterminées,

**caractérisé en ce que**

dans un second essai, l'extrémité côté générateur de la chaîne cinématique (1) est entraînée par le générateur en tant que moteur et de plus la grandeur dépendant du couple de l'arbre principal au niveau de l'extrémité côté moteur et la puissance électrique $P_{elec}$ au niveau de l'extrémité côté générateur sont déterminées, et à partir des puissances électriques $P_{elec}$ déterminée au premier essai et au second essai et des grandeurs dépendant du couple de l'arbre principal des paramètres d'étalonnage a et b sont déterminés, en particulier en tenant compte notamment d'au moins une hypothèse prédéterminée sur la base d'expériences ou d'un savoir-faire, les premier et second essais étant effectués pour au moins deux niveaux de couple.

3. Procédé selon la revendication 1 ou 2, **caractérisé en ce qu'**une hypothèse pour déterminer l'efficacité ou pour étalonner une mesure de couple est l'hypothèse que l'efficacité du premier essai est égal à l'efficacité du second essai.

4. Procédé selon la revendication 1 ou 2, **caractérisé en ce qu'**une hypothèse pour déterminer l'efficacité ou pour étalonner une mesure de couple est l'hypothèse qu'une perte de puissance de l'un des deux essais est une fraction de la perte de puissance totale des deux essais, en particulier la moitié de la perte de puissance totale.

5. Procédé selon l'une quelconque des revendications précédentes, **caractérisé en ce que** pour déterminer le couple de l'arbre principal (2), la grandeur dépendant du couple de l'arbre principal est mesurée au moyen d'un capteur, de préférence une jauge de contrainte

et/ou

**en ce qu'**une position angulaire θ de l'arbre principal ou sa vitesse de rotation ω est de préférence mesurée à l'aide d'un capteur in-crémentiel.

6. Procédé selon l'une quelconque des revendications précédentes, **caractérisé en ce qu'**une puissance mécanique pour le premier et pour le second essai est déterminée à partir de la grandeur dépendant du couple de l'arbre principal.

7. Procédé selon l'une quelconque des revendications précédentes, **caractérisé en ce que** pour déterminer la puissance électrique, une tension et un courant sont mesurés au niveau de l'extrémité côté générateur entre le générateur (4) et un convertisseur (5) connecté à celui-ci ou au niveau du côté du convertisseur (5) opposé au générateur (4).

8. Procédé selon l'une quelconque des revendications précédentes, **caractérisé en ce qu'**une perte de puissance d'essai est déterminée pour le premier essai et pour le second essai, ces deux pertes de puissance d'essai déterminées sont additionnées pour former une perte de puissance totale, et l'efficacité est calculé à l'aide de la perte de puissance totale.

9. Procédé selon l'une quelconque des revendications précédentes, **caractérisé en ce que** pour déterminer la grandeur dépendant du couple de l'arbre principal, le signal de mesure du capteur est évalué, qui est agencé sur un arbre de sortie du moteur, notamment un moteur de banc d'essai (8), au niveau de l'arbre principal (2), en particulier une éolienne, ou sur un adaptateur d'arbre entre l'arbre de sortie du moteur et l'arbre principal (2).

10. Procédé selon l'une quelconque des revendications précédentes, **caractérisé en ce que** lors du premier essai, différents points de travail de la chaîne cinématique (1), en particulier une éolienne, sont approchés et lors du second essai, différents points de travail de la chaîne cinématique (1), en particulier l'éolienne, sont approchés, les points de travail approchés lors des premier et second essai étant de préférence les mêmes.

11. Procédé selon l'une quelconque des revendications précédentes, **caractérisé en ce que** lors du second essai, l'extrémité côté générateur de la chaîne cinématique (1) est entraînée de telle sorte que la grandeur dépendant du couple de l'arbre principal lors du second essai soit égale à la grandeur dépendant du couple de l'arbre principal déterminée lors du premier essai.

12. Procédé selon l'une quelconque des revendications 1 à 10, **caractérisé en ce que** lors du second essai, l'extrémité côté générateur de la chaîne cinématique (1) est entraînée de telle sorte que la puissance électrique lors du second essai soit égale à la puissance électrique déterminée lors du premier essai.

13. Procédé selon l'une quelconque des revendications précédentes, dans lequel des puissances mécaniques $P_{mechA}$ et $P_{mechB}$ sont déterminées en fonction de deux constantes a et b respectivement pour le premier essai et pour le second essai en utilisant la grandeur dépendant du couple de l'arbre principal

$$\tilde{P}_{mech.A} = \frac{\int_{\theta_0}^{\theta_A}(a\varepsilon + b)d\theta}{t_A}$$

$$\tilde{P}_{mech.B} = \frac{\int_{\theta_0}^{\theta_B}(a\varepsilon + b)d\theta}{t_B}$$

et sur la base de

$$P_{mech.A} - P_{elec.A} = k(P_{elec.B} - P_{mech.B})$$

et

$$P_{mech.A} + kP_{mech.B} = kP_{elec.B} + P_{elecA}$$

dans lequel k est un rapport entre les pertes du premier essai et du second essai,
les paramètres d'étalonnage a et b pour déterminer un couple

$$T = a\varepsilon + b$$

sont déterminés, T étant le couple et la grandeur mesurée dépendant du couple de l'arbre principal.

14. Procédé selon l'une quelconque des revendications précédentes, **caractérisé en ce que** chacun des niveaux de couple définit un niveau de puissance différent de la chaîne cinématique (1).

15. Procédé selon l'une quelconque des revendications précédentes, dans lequel les paramètres d'étalonnage sont déterminés à partir d'une efficacité prédéterminé, puis des efficacités sont déterminés pour au moins deux niveaux de puissance, puis les paramètres d'étalonnage sont à nouveau déterminés et les deux dernières étapes sont répétées jusqu'à ce que l'écart entre la dernière et la détermination précédente est inférieur à une valeur prédéterminée.

Fig. 1

Fig. 2

Fig. 3

Fig. 4

Fig. 5

Fig. 6

I

$\mathrm{Effi}_{\mathrm{vorgegeben}}$

$\mathrm{a,b}_{\mathrm{ini}}$

II

$\mathrm{Effi}_{\mathrm{I}}$ , $\mathrm{Effi}_{\mathrm{II}}$ , ...

III

$\mathrm{a,b}_{\mathrm{neu}}$

Konvergenz ?

Nein

Ja

Ende

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19829178

**In der Beschreibung aufgeführte Nicht-Patentliteratur**

- **MICHAEL PAGITSCH et al.** Feasibility of large-scale calorimetric efficiency measurement for wind turbine generator drivetrains. *JOURNAL OF PHYSICS: CONFERENCE SERIES*